# EUROPÄISCHE PATENTSCHRIFT

(11) **EP 4 635 055 B1**
(45) Veröffentlichungstag und Bekanntmachung des Hinweises auf die Patenterteilung: **16.09.2026**
(21) Anmeldenummer: 23825205.0
(22) Anmeldetag: 12.12.2023
(51) Int. Cl.: H02K 1/30, H02K 1/32, H02K 3/24, H02K 9/06, H02K 35/02, H02K 53/00

(54) **ELEKTRISCHE MASCHINE, WIE EIN ELEKTROMOTOR ODER GENERATOR, UND MASCHINENANORDNUNG MEHRERER ELEKTRISCHER MASCHINEN**
ELECTRIC MACHINE, SUCH AS AN ELECTRIC MOTOR OR GENERATOR, AND MACHINE ASSEMBLY OF A PLURALITY OF ELECTRIC MACHINES
MACHINE ÉLECTRIQUE, TELLE QU'UN MOTEUR OU UN GÉNÉRATEUR ÉLECTRIQUE, ET ENSEMBLE MACHINE D'UNE PLURALITÉ DE MACHINES ÉLECTRIQUES

(30) Priorität: 18.12.2022 AT 602042022
(43) Veröffentlichungstag der Anmeldung: 22.10.2025
(73) Patentinhaber: PAGITZ, Andreas, 9470 St. Paul im Lavanttal (AT)
(72) Erfinder: PAGITZ, Andreas, 9470 St. Paul im Lavanttal (AT)
(74) Vertreter: Wirnsberger & Lerchbaum Patentanwälte OG
(86) Internationale Anmeldenummer: PCT/AT2023/060438
(87) Internationale Veröffentlichungsnummer: WO 2024/130285

(56) Entgegenhaltungen:
- EP-A1- 3 522 335
- US-A1- 2004 036 367
- US-A1- 2010 201 217
- US-A1- 2017 012 571

## Beschreibung

Die Erfindung betrifft eine elektrische Maschine, wie einen Elektromotor oder elektrischen Generator, aufweisend einen Stator und einen relativ zum Stator um eine Rotationsachse rotierbaren Rotor, um mit elektromagnetischer Koppelung des Stators und des Rotors zwischen elektrischer Energie und Bewegungsenergie zu wandeln.

Eine elektrische Maschine, wie ein Elektromotor oder ein elektrischer Generator, weist üblicherweise einen relativ zum Stator um eine Rotationsachse rotierbaren Rotor auf, wobei die elektrische Maschine häufig eine Kühleinrichtung, beispielsweise in Form eines Ventilators oder in Form von Kühlkanälen zur Führung eines Kühlfluids, aufweist, um den Rotor zu kühlen. Es hat sich in der Praxis als zweckmäßig erwiesen, ein oder mehrere Kühlkanäle parallel zur Rotationsachse durch eine Rotorwelle des Rotors hindurchzuführen, um den Rotor von innen zu kühlen. Die Dokumente EP3522335 A1, US2004/036367 A1 und US2010/201217 A1 offenbaren elektrische Maschinen, die relevant im Stand der Technik sind.

Hier setzt die Erfindung an. Aufgabe der Erfindung ist es, eine elektrische Maschine der eingangs genannten Art anzugeben, welche eine hohe Einsatzpraktikabilität aufweist.

Die Aufgabe wird erfindungsgemäß dadurch gelöst, dass bei einer elektrischen Maschine der eingangs genannten Art der Rotor mit einer Rotorkonstruktion, aufweisend ein erstes Stirnelement, ein zweites Stirnelement, welche Stirnelemente entlang der Rotationsachse voneinander beabstandet sind, und jeweils zwischen den Stirnelementen verlaufenden Stäben, gebildet ist, wobei die Stäbe entlang eines Umfangs um die Rotationsachse beabstandet voneinander verteilt angeordnet sind, sodass die Stäbe zwischen dem ersten Stirnelement und zweiten Stirnelement eine sich erweiternden Hohlraum definieren, um im Einsatz bei Rotation des Rotors mit den Stäben eine Kühlfluidströmung eines im Hohlraum befindlichen Kühlfluids in Richtung des zweiten Stirnelementes zu generieren.

Grundlage der Erfindung ist die Idee, einen Rotor einer elektrischen Maschine derart auszugestalten, dass ein einsatzpraktikabler Aufbau sowohl hinsichtlich einer Einsatzfunktionalität als auch hinsichtlich einer Kühlung des Rotors erreicht wird. Im Speziellen ist es günstig, wenn eine Ausgestaltung des Rotors eine einfache Koppelung von Rotoren mehrerer elektrischer Maschinen zur Drehmomentübertragung ermöglicht, um im Speziellen eine Maschinenanordnung, aufweisend eine als Elektromotor ausgebildete elektrische Maschine und eine als elektrischer Generator ausgebildete elektrische Maschine, deren Rotoren zur Drehmomentübertragung, üblicherweise über ein Getriebe, miteinander gekoppelt sind, umzusetzen.

Mit der Rotorkonstruktion ist ein einfacher und wartungsarmer Aufbau erreichbar, wobei mit den Stäben im Einsatz durch die Rotation der Stäbe um die Rotationsachse auf einfache Weise eine Kühlfluidströmung eines im Hohlraum befindlichen Kühlfluids in einer vom ersten Stirnelement zum zweiten Stirnelement orientierten Richtung erzeugbar ist. Üblicherweise wird im Einsatz das Kühlfluid durch die Stäbe mit einer Verdrängungskraft beaufschlagt, sodass in einem im Hohlraum befindlichen Kühlfluid eine Kühlfluidströmung des Kühlfluids vom ersten Stirnelement zum zweiten Stirnelement generiert wird. Üblicherweise ist vorgesehen, dass im Einsatz durch Rotation der Stäbe um die Rotationsachse im Hohlraum befindliches Kühlfluid mit den Stäben zumindest teilweise in Richtung des zweiten Stirnelementes geleitet und/oder beschleunigt wird. Die Kühlfluidströmung ist in der Regel zumindest abschnittsweise in Form einer Wirbelströmung umgesetzt. Üblicherweise bewirkt die Rotation der Rotorkonstruktion, insbesondere der Stäbe, eine Zentrifugalkraft auf im Hohlraum befindliches Fluid. Das Kühlfluid ist vorzugsweise gasförmig, insbesondere mit Luft, umgesetzt. Die Kühlfluidströmung kann eine gasförmige Kühlfluidströmung, insbesondere Luftströmung, sein. Der Hohlraum ist üblicherweise umfänglich, insbesondere um die Rotationsachse, von den Stäben umgeben, wobei die Stäbe üblicherweise entlang des Umfangs voneinander beabstandet sind. In der Regel befindet sich der Hohlraum zwischen dem ersten Stirnelement und dem zweiten Stirnelement, insbesondere entlang der Rotationsachse. Vorzugsweise erstreckt sich der Hohlraum vom ersten Stirnelement zum zweiten Stirnelement, insbesondere entlang der Rotationsachse.

Der Hohlraum kann sich zumindest abschnittsweise, insbesondere entlang einer überwiegenden, vorzugsweise im Wesentlichen gänzlichen, Abstandslänge entlang der Rotationsachse vom ersten Stirnelement zum zweiten Stirnelement erweitern. Die Erweiterung bezieht sich üblicherweise auf eine orthogonal zur Rotationsachse orientierte Querschnittsfläche des Hohlraums entlang der Rotationsfläche. Die Querschnittsfläche ist in der Regel durch die Stäbe definiert, insbesondere begrenzt. Üblicherweise definieren die Stäbe einen sich vom ersten Stirnelement zum zweiten Stirnelement erweiternden Hohlraum, um im Einsatz bei Rotation des Rotors mit den Stäben eine Kühlfluidströmung eines im Hohlraum befindlichen Kühlfluids in Richtung des zweiten Stirnelements zu generieren.

Der jeweilige Stab erstreckt sich üblicherweise vom ersten Stirnelement zum zweiten Stirnelement. In der Regel sind Längsachsen der Stäbe zueinander divergierend vom ersten Stirnelement zum zweiten Stirnelement orientiert. Die Stäbe sind üblicherweise mit einem jeweiligen ersten Ende der Stäbe entlang eines gedanklichen ersten Anordnungsumfangs um die Rotationsachse am ersten Stirnelement angeordnet. Die Stäbe sind üblicherweise mit einem jeweiligen zweiten Ende der Stäbe entlang eines gedanklichen zweiten Anordnungsumfangs um die Rotationsachse am zweiten Stirnelement angeordnet. Der erste Anordnungsumfang kann Teil des ersten Stirnelementes und/oder der zweite Anordnungsumfang kann Teil des zweiten Stirnelementes sein. Die ersten Enden der Stäbe sind in, vorzugsweise regelmäßigen, Abständen entlang des ersten Anordnungsumfangs am ersten Stirnelement angeordnet. Die zweiten Enden sind in, vorzugsweise regelmäßigen, Abständen entlang des zweiten Anordnungsumfangs am zweiten Stirnelement angeordnet. Der erste Anordnungsumfang und/oder der zweite Anordnungsumfang können jeweils kreisförmig sein. Der jeweilige Anordnungsumfang liegt üblicherweise in einer orthogonal zur Rotationsachse orientierten Ebene. Die Stäbe sind vorzugsweise jeweils geradlinig ausgebildet.

Üblicherweise bilden die Rotorkonstruktion, insbesondere die Stäbe und in der Regel die Stirnelemente, eine Käfigstruktur, welche die Rotationsachse umfänglich umgibt. Die Stäbe sind entlang des Umfangs um die Rotationsachse üblicherweise derart beabstandet voneinander angeordnet, dass zwischen jeweils zwei entlang des Umfangs benachbarten Stäben ein Durchführungsspalt gebildet ist, durch welchen Durchführungspalt ein, insbesondere im Einsatz, im Hohlraum befindliches Kühlmedium hindurchfließen kann. Typischerweise sind entlang des Umfangs um die Rotationsachse jeweils zwei benachbarte Stäbe entlang einer überwiegenden, vorzugsweise im Wesentlichen gänzlichen, Länge der Stäbe, in der Regel vom ersten Stirnelement zum zweiten Stirnelement, voneinander beabstandet. Üblicherweise ist der Rotor relativ zum Stator rotierbar gelagert. Der Rotor weist üblicherweise eine, insbesondere um die Rotationsachse rotierbare, Rotorwelle auf. In der Regel bildet die Rotorkonstruktion einen Teil, insbesondere ein Segment, der Rotorwelle. Insbesondere kann die Rotorkonstruktion die Rotorwelle sein. Eine Längsachse der Rotorwelle verläuft üblicherweise parallel zur, insbesondere entlang, der Rotationsachse.

Die elektrische Maschine kann ein Elektromotor, insbesondere ein Drehstrommotor, oder ein elektrischer Generator sein. Der Drehstrommotor kann eine Drehstrom-Synchronmaschine oder eine Drehstrom-Asynchronmaschine sein. Der Stator ist üblicherweise den Rotor umfänglich umgebend ausgebildet, vorzugsweise zum Rotor formkorrespondierend. Der Stator und der Rotor sind üblicherweise ausgebildet, mit Bildung von Lorentzkraft elektrische Energie und Bewegungsenergie ineinander umzuwandeln. Dies gilt insbesondere im Einsatz der elektrischen Maschine.

Bewährt hat es sich, wenn im und/oder am jeweiligen Stab eine oder mehrere Spulenwicklungen zur Bildung eines Magnetfeldes, insbesondere Pols, des Rotors angeordnet sind. Mit den Spulenwicklungen kann im Einsatz ein Pol des Rotors gebildet werden. Das Magnetfeld wird üblicherweise mit Führung eines elektrischen Stroms in den Spulenwicklungen gebildet. Die Spulenwicklungen sind üblicherweise Teil des Rotors. Die jeweilige Spulenwicklung kann mit einem elektrischen Leiter, insbesondere in Form eines Drahtes, gebildet sein. Der elektrische Leiter kann mit, insbesondere im Wesentlichen aus Kupfer oder einer Kupferbasislegierung, gebildet sein. Die elektrische Leitung der jeweiligen Spulenwicklung und/oder die jeweilige Spulenwicklung kann entlang einer überwiegenden Längserstreckung des jeweiligen Stabes verlaufend angeordnet sein. Die Spulenwicklungen bilden üblicherweise eine Spule zur Magnetfelderzeugung, insbesondere um einen Pol des Rotors zu bilden.

Das erste Stirnelement und/oder das zweite Stirnelement können eine die Rotationsachse umfänglich umgebende Ringform aufweisen. Dies gilt insbesondere in einem zur Rotationsachse orthogonalen Querschnitt durch das jeweilige Stirnelement. Im Einsatz kann durch eine Öffnung der jeweiligen Ringform das Kühlfluid hindurchgeführt werden. Das erste Stirnelement kann eine erste Durchgangsöffnung aufweisen, um im Einsatz Kühlfluid durch die erste Durchgangsöffnung hindurch, üblicherweise von einer Außenumgebung, in den Hohlraum zu führen. Das zweite Stirnelement kann eine zweite Durchgangsöffnung aufweisen, um im Einsatz Kühlfluid durch die zweite Durchgangsöffnung hindurch aus dem Hohlraum heraus, üblicherweise in die Außenumgebung, zu führen. Die jeweilige Durchgangsöffnung kann mit der Ringform des jeweiligen Stirnelementes gebildet sein, insbesondere vorgenannte Öffnung der jeweiligen Ringform sein, wobei die Rotationsachse üblicherweise durch die Durchgangsöffnung verläuft. Üblicherweise ist die Öffnung und/oder die jeweilige Durchgangsöffnung in Bezug auf einen Durchgang, insbesondere von Kühlfluid, durch diese parallel, insbesondere entlang der Rotationsachse, orientiert. Die Ringform des ersten Stirnelementes weist üblicherweise einen kleineren durchschnittlichen Außendurchmesser als die Ringform des zweiten Stirnelementes auf. Die Ringform des ersten Stirnelementes und/oder die Ringform des zweiten Stirnelementes kann im Wesentlichen kreisförmig sein. Die Rotationsachse kann durch einen Mittelpunkt der jeweiligen Ringform, insbesondere deren Durchgangsöffnung, verlaufen.

Günstig ist es, wenn die Stäbe entlang einer gedachten Rotationsfläche, welche sich in Richtung vom ersten Stirnelement zum zweiten Stirnelement erweitert, verlaufen. Vorteilhaft ist es, wenn die Stäbe entlang einer gedachten Konusmantelfläche, welche sich in Richtung vom ersten Stirnelement zum zweiten Stirnelement erweitert, verlaufen. Die Konusmantelfläche ist üblicherweise eine gedachte Mantelfläche eines Kegelstumpfes. Der Hohlraum kann ein konusförmiges, insbesondere kegelstumpfförmiges, Hohlraumvolumen umfassen, wobei sich die Konusform, insbesondere Kegelstumpfform, des Hohlraumvolumens in Richtung vom ersten Stirnelement zum zweiten Stirnelement erweitert. Üblicherweise bezieht sich die Rotationsfläche und/oder Konusmantelfläche auf die Rotationsachse bzw. ist die Rotationsfläche üblicherweise mit einer Rotation um die Rotationsachse definiert. Die Rotationsfläche kann sich zumindest abschnittsweise, insbesondere entlang einer überwiegenden, bevorzugt im Wesentlichen gänzlichen, Länge der Rotationsfläche und/oder Stäbe vom ersten Stirnelement zum zweiten Stirnelement erweitern. Die Erweiterung bezieht sich üblicherweise auf eine orthogonal zur Rotationsachse orientierte Querschnittsfläche des Hohlraums und/oder der Rotationsfläche.

Üblicherweise ist die elektrische Maschine, insbesondere der Stator und/oder Rotor, mit einer entlang der Rotationsachse in Richtung vom ersten Stirnelement zum zweiten Stirnelement sich erweiternden, insbesondere konusförmigen, Außengestalt ausgebildet. Dies kann als Folge der Form des Rotors, insbesondere der Rotorkonstruktion, und insbesondere einem zum Rotor formkorrespondierend ausgebildeten Stator, platzeffizient erfolgen. Dies ermöglicht, mehrere elektrische Maschinen nebeneinander platzsparend anzuordnen, wobei vorzugsweise deren Rotoren zur Drehmomentübertragung miteinander gekoppelt sind. Die Außengestalt der elektrischen Maschine kann formkorrespondierend zu einer Außengestalt des Rotors, insbesondere der Rotorkonstruktion, sein.

Für ein ruhiges Rotationsverhalten des Rotors ist es günstig, wenn in einer Sicht parallel zur, insbesondere entlang, der Rotationsachse die Stäbe unter einem Versatzwinkel in Bezug auf eine jeweilige gedachte radiale Ausrichtung der Stäbe vom ersten Stirnelement zum zweiten Stirnelement verlaufen. Insbesondere ist die Sicht in Richtung vom ersten Stirnelement zum zweiten Stirnelement orientiert. Üblicherweise ist der jeweilige Stab, insbesondere dessen Längsachse, unter einem Versatzwinkel in Bezug auf eine, insbesondere dem jeweiligen Stab zugeordnete, gedachte radiale Gerade vom ersten Stirnelement zum zweiten Stirnelement ausgerichtet. Die jeweilige radiale Gerade verläuft üblicherweise durch einen Anordnungspunkt, an welchem der jeweilige Stab am ersten Stirnelement, insbesondere am ersten Anordnungsumfang, angeordnet ist. Bewährt hat es sich, wenn die Stäbe einen gleichen Versatzwinkel aufweisen. Der Versatzwinkel kann zwischen 3° und 60°, insbesondere zwischen 5° und 45°, bevorzugt zwischen 10° und 30°, sein. Die radiale Ausrichtung und/oder die radiale Gerade bezieht sich üblicherweise auf die Rotationsachse als Ausgangspunkt.

Von Vorteil ist es, wenn an einem oder mehreren der Stäbe ein vom jeweiligen Stab in den Hohlraum abragendes Flügelelement, insbesondere aufweisend eine Schaufelfläche, zur Kraftbeaufschlagung des Kühlfluids bei Rotation des Rotors angeordnet ist. Das Flügelelement kann an einer der Rotationsachse zugewandten Unterseite des jeweiligen Stabes angeordnet sein. Das Flügelelement ist üblicherweise Teil des Rotors, insbesondere Teil des jeweiligen Stabes. Das jeweilige Flügelelement kann in einem orthogonal zur Längsachse des jeweiligen Stabes orientierten Querschnitt durch den jeweiligen Stab eine, insbesondere spitz, zulaufende Form, vorzugsweise von einem am Stab angeordneten Basisende des Flügelelementes zu einem dem Basisende am Flügelelement gegenüberliegenden Kopfende des Flügelelementes, aufweisen. Die Schaufelfläche kann eine das Basisende und Kopfende verbindende Seitenfläche des Flügelelementes sein. Die Schaufelfläche kann zumindest abschnittsweise, insbesondere im Wesentlichen, konkav ausgebildet sein. Es können mehrere Flügelelemente am jeweiligen Stab angeordnet sein. Das jeweilige Flügelelement kann sich entlang einer überwiegenden Länge des jeweiligen Stabes entlang des Stabes erstrecken. Günstig ist es, wenn der jeweilige Stab in einem orthogonal zur Längsachse des Stabes orientierten Querschnitt durch den Stab eine längliche Form, vorzugsweise mit einer zum Hohlraum orientierten Längserstreckung der länglichen Form, aufweist. Die jeweilige Längserstreckung der länglichen Form kann in Richtung des Hohlraums orientiert sein. Zweckmäßig kann im Querschnitt eine Längsachse der Längserstreckung der länglichen Form einen Winkel zu einer durch die Rotationsachse und einen Mittpunkt der länglichen Form des Stabes führenden Radialgerade aufweisen, wobei der Winkel von 0° bis 70°, insbesondere von 10° bis 45°, ist.

Es hat sich bewährt, wenn in und/oder an einem oder mehreren Stäben der Stäbe, insbesondere in einem vom Hohlraum abgewandten Außenbereich des Stabes, ein Permanentmagnet zur Bildung eines Erregersystems der elektrischen Maschine angeordnet ist. Zweckmäßig können mehrere solche Permanentmagnete im und/oder am jeweiligen Stab angeordnet sein. Der Außenbereich kann eine dem Hohlraum abgewandte Längshälfte des jeweiligen Stabes sein.

Von Vorteil ist es, wenn der Rotor ein Getriebebauteil aufweist, um ein Drehmoment des Rotors, insbesondere der Rotorwelle, über das Getriebebauteil zu übertragen. Über das Getriebebauteil kann Rotationsenergie dem Rotor zur Rotation um die Rotationsachse zugeführt oder von einer Rotation des Rotors um die Rotationsachse abgeführt werden. Das Getriebebauteil kann ein Zahnrad sein, welches vorzugsweise umfänglich um die Rotationsachse verläuft. Praktikabel ist es, wenn am ersten Stirnelement und/oder am zweiten Stirnelement jeweils ein, insbesondere vorgenanntes, Getriebebauteil angeordnet ist, um ein Drehmoment des Rotors, insbesondere der Rotorwelle, über das jeweilige Getriebebauteil zu übertragen. Das jeweilige Getriebebauteil kann als Teil des ersten Stirnelementes bzw. zweiten Stirnelementes ausgebildet sein. Das Getriebebauteil kann ein Zahnrad sein, welches umfänglich um das jeweilige Stirnelement verläuft. Das Getriebebauteil kann ausgebildet sein, mit einem zum Getriebebauteil korrespondierend, insbesondere formkorrespondierend, ausgebildeten weiteren Getriebebauteil zur Übertragung eines Drehmoments zu wechselwirken. Das weitere Getriebebauteil kann ein Getriebebauteil einer weiteren elektrischen Maschine sein. Das Getriebebauteil kann ein Teil eines Getriebes der elektrischen Maschine sein, um mit dem Getriebe ein Drehmoment des Rotors, insbesondere der Rotorwelle, zu übertragen. Bewährt hat es sich, wenn das Getriebe ausgebildet ist, eine Drehzahlübersetzung einer Drehzahl des Rotors ins Schnelle durchzuführen.

Von Vorteil ist es, wenn eine Startereinheit zur Erzeugung einer Anfangsdrehzahl eines Rotors einer elektrischen Maschine, insbesondere einer in diesem Dokument beschriebenen elektrischen Maschine, vorhanden ist, wobei die Startereinheit zur Wandlung zwischen Bewegungsenergie und Mehrphasenstrom eine Spulenanordnung von mehreren relativ zueinander positionsfesten elektrischen Spulen und eine Magneteanordnung von mehreren relativ zueinander positionsfesten Magneten aufweist, wobei einer der Magnete und eine der Spulen ein Magnet-Spule-Paar bilden, wobei unterschiedliche Magnet-Spule-Paare voneinander verschiedene Abstände zwischen dem jeweiligen Magnet und der jeweiligen Spule aufweisen, wobei die Startereinheit eine Bewegungseinrichtung mit einem Bewegungselement, wie einer Schubstange, aufweist, sodass eine zyklische Bewegung des Bewegungselementes mit einer zyklischen Bewegung der Magneteanordnung und der Spulenanordnung relativ zueinander korrespondiert, um einen Abstand zwischen den Magneten und Spulen der Magnet-Spule-Paare zyklisch zu variieren. Auf diese Weise kann Bewegungsenergie des Bewegungselementes, insbesondere mit elektromagnetischer Induktion, in einen Mehrphasenstrom gewandelt werden oder ein Mehrphasenstrom mit Bildung eines Magnetfelds der Spulen in eine Bewegungsenergie des Bewegungselementes gewandelt werden. Die Startereinheit kann Teil der in diesem Dokument beschriebenen elektrischen Maschine sein, insbesondere wenn die elektrische Maschine als Elektromotor ausgebildet ist. Die Startereinheit kann mehrere Aufnahmebehälter aufweisen, wobei jeweils eine der Spulen an jeweils einem der Aufnahmebehälter angeordnet ist. Die Aufnahmebehälter können mit, insbesondere auf, einem gemeinsamen Trageelement der Startereinheit, beispielsweise einer Trageplatte der Startereinheit, gehalten, insbesondere auf dieser angeordnet, sein. Die Spulenanordnung kann relativ zu den Aufnahmebehälter derart gesteuert bewegbar sein, dass mehrere der Magnete zu unterschiedlichen Zeitpunkten in die jeweiligen Aufnahmebehälter und/oder Spulen eingefügt werden. Die Magnete können auf einer gemeinsamen Plattform angeordnet sein, wobei das Bewegungselement mit der Plattform verbunden ist, sodass eine Bewegung des Bewegungselementes zu einer, insbesondere zyklischen, Bewegung der Plattform korrespondiert. Das Bewegungselement kann mit einer Motorvorrichtung der Startereinheit zum Antrieb des Bewegungselementes verbunden sein.

Von Vorteil ist es, wenn eine Maschinenanordnung, aufweisend mehrere elektrische Maschinen, vorhanden ist, wobei eine der elektrischen Maschinen als Elektromotor und eine, insbesondere andere, der elektrischen Maschinen als elektrischer Generator umgesetzt ist, wobei der Rotor des Elektromotors und der Rotor des Generators über ein Getriebe der Maschinenanordnung zur Drehmomentübertragung gekoppelt sind, um mit dem Elektromotor, insbesondere dessen Rotor, den Generator, insbesondere dessen Rotor, anzutreiben. Das Getriebe kann mit einem ersten Getriebebauteil des Elektromotors und einem zweiten Getriebebauteil des Generators umgesetzt sein. Das erste Getriebebauteil und/oder zweite Getriebebauteil kann wie, insbesondere vorstehend, in diesem Dokument zum Getriebebauteil beschrieben umgesetzt sein. Vorzugsweise ist das erste Getriebebauteil am Rotor des Elektromotors angeordnet und das zweite Getriebebauteil am Rotor des Generators angeordnet. Das erste Getriebebauteil und/oder das zweite Getriebebauteil sind vorzugsweise als Zahnräder ausgebildet. Die elektrischen Maschinen können jeweils wie in diesem Dokument beschrieben umgesetzt sein.

Günstig ist es, wenn das erste Getriebebauteil am zweiten Stirnelement des Elektromotors angeordnet ist und das zweite Getriebebauteil am ersten Stirnelement des Generators angeordnet ist. Das erste Getriebebauteil kann mit dem zweiten Getriebebauteil zur Drehmomentübertragung, insbesondere unmittelbar, gekoppelt sein, um mit dem Elektromotor, insbesondere dessen Rotor, den Generator, insbesondere dessen Rotor, anzutreiben. Zweckmäßig ist es, wenn das erste Getriebebauteil als erstes Zahnrad und das zweite Getriebebauteil als zweites Zahnrad ausgebildet ist, wobei das erste Zahnrad und das zweite Zahnrad formschlüssig zur Drehmomentübertragung ineinandergreifen. Dies gilt insbesondere für Zähne des ersten Zahnrades und Zähne des zweiten Zahnrades.

Eine platzsparende Anordnung ist umsetzbar, wenn der Elektromotor und der Generator in Bezug auf deren Rotationsachsen gegengleich zueinander ausgerichtet nebeneinander angeordnet sind. Im Besonderen kann das zweite Stirnelement des Elektromotors korrespondierend zum ersten Stirnelement des Generators angeordnet sein. Der Elektromotor und der Generator sind üblicherweise derart angeordnet, dass deren Rotationsachse parallel zueinander orientiert sind. Der Elektromotor und der Generator weisen üblicherweise einander entgegengesetzte Richtungen vom jeweiligen ersten Stirnelement zum jeweiligen zweiten Stirnelement entlang der jeweiligen Rotationsachse auf. Auf diese Weise können die Rotoren effizient zur Drehmomentübertragung gekoppelt werden. Im Speziellen kann auf diese Weise eine einfache Koppelung des ersten Getriebebauteils mit dem zweiten Getriebebauteil umgesetzt werden.

Üblicherweise sind der Elektromotor und der Generator, insbesondere deren Stator und/oder Rotor, mit einer entlang der Rotationsachse in Richtung vom ersten Stirnelement zum zweiten Stirnelement sich erweiternden, insbesondere konusförmigen, Außengestalt ausgebildet. Dies kann als Folge der Form des Rotors, insbesondere der Rotorkonstruktion, und insbesondere einem zum Rotor formkorrespondierend ausgebildeten Stator, platzeffizient erfolgen. Die Außengestalt des Elektromotors und/oder Generators kann formkorrespondierend zu einer Außengestalt des jeweiligen Rotors, insbesondere der jeweiligen Rotorkonstruktion, sein. Der Elektromotor und der Generator sind in Bezug auf eine jeweilige Richtung entlang der jeweiligen Rotationsachse vom jeweiligen ersten Stirnelement zum jeweiligen zweiten Stirnelement gegengleicher Richtung orientiert nebeneinander angeordnet, um die Rotoren miteinander zu koppeln. Auf diese Weise können die elektrischen Maschinen, insbesondere der Elektromotor und der Generator, platzsparend nebeneinander angeordnet sein.

Günstig ist es, wenn mehrere der elektrischen Maschinen jeweils als Generator umgesetzt sind, wobei das erste Getriebebauteil des Elektromotors mit mehreren zweiten Getriebebauteilen der Generatoren zur Drehmomentübertragung gekoppelt ist, um mit dem Elektromotor, insbesondere dessen Rotor, die Generatoren, insbesondere deren Rotoren, anzutreiben. Üblicherweise sind die zweiten Getriebebauteile jeweils separat voneinander und/oder unmittelbar zur Drehmomentübertragung mit dem ersten Getriebebauteil gekoppelt. Die Generatoren und/oder deren jeweiliges zweites Getriebebauteil kann wie, insbesondere vorstehend, in diesem Dokument beschrieben umgesetzt sein. Es hat sich bewährt, wenn zumindest drei elektrische Maschinen jeweils als Generator umgesetzt sind, wobei das erste Getriebebauteil des Elektromotors mit dem zweiten Getriebebauteil des jeweiligen Generators zur Drehmomentübertragung gekoppelt ist, um mit dem Elektromotor, insbesondere dessen Rotor, die Generatoren, insbesondere deren Rotoren, anzutreiben. Der jeweilige Generator kann, insbesondere vorstehend, in diesem Dokument beschrieben ausgestaltet und/oder relativ zum Elektromotor orientiert sein.

Vorteilhaft ist es, wenn der Rotor des Elektromotors und der Rotor des jeweiligen Generators über das Getriebe, insbesondere die Getriebebauteile, mit einer Drehzahlübersetzung, insbesondere einer Drehzahl des Rotors des Elektromotors, ins Schnelle gekoppelt sind. Hierzu kann das erste Zahnrad einen größeren durchschnittlichen Durchmesser als das zweite Zahnrad aufweisen. Günstig ist es, wenn der Rotor des Elektromotors eine höhere Polpaarzahl als der Rotor des jeweiligen Generators aufweist.

Bewährt hat es sich, wenn ein elektrischer Ausgang eines, insbesondere elektrische Ausgänge mehrerer, der Generatoren mit einem elektrischen Eingang des Elektromotors zur energetischen Versorgung des Elektromotors, insbesondere über einen elektrischen Energiespeicher der Maschinenanordnung, gekoppelt ist. Der elektrische Energiespeicher kann zwischen den Generator und den Elektromotor geschaltet sein, um den Energiespeicher mit dem Generator aufzuladen und den Elektromotor mit dem Energiespeicher anzutreiben. Der elektrische Energiespeicher kann eine, insbesondere wiederaufladbare, Batterie oder ein Kondensator sein. Der elektrische Ausgang von einem oder mehreren der Generatoren kann mit dem Energiespeicher zur Aufladung des Energiespeichers elektrisch verbunden sein. Der elektrische Eingang des Elektromotors kann mit dem Energiespeicher zum Antrieb des Elektromotors elektrisch verbunden sein. Auf diese Weise kann mit dem jeweiligen Generator gebildete elektrische Energie dem Elektromotor für dessen Antrieb zugeführt, insbesondere zumindest teilweise an diesen zurückgeführt, werden.

Ist die elektrische Maschine als Elektromotor umgesetzt, sind der Stator und der Rotor üblicherweise ausgebildet, mit Bildung von Lorentzkraft, üblicherweise basierend auf einer dem Elektromotor zugeführten elektrischen Energie, insbesondere einem dem Elektromotor zugeführten elektrischen Strom, eine elektromagnetische Abstoßung und/oder Anziehung zwischen Magnetfeldern des Stators und Magnetfeldern des Rotors umzusetzen, sodass der Rotor relativ zum Stator um die Rotationsachse rotiert wird. Ist die elektrische Maschine als Elektromotor ausgebildet, sind der Stator und der Rotor üblicherweise ausgebildet, mit Bildung von Lorentzkraft, üblicherweise basierend auf einer dem Rotor zugeführten Bewegungsenergie, eine elektrische Leistung, insbesondere elektrische Spannung, zu generieren. Hierzu können der Stator und/oder der Rotor jeweils Permanentmagnete und/oder elektrische Spulenwicklungen aufweisen. Die elektrischen Spulenwicklungen bilden üblicherweise Spulen des Rotors bzw. Stators. Einsatz, insbesondere der elektrischen Maschine, bezeichnet üblicherweise einen bestimmungsgemäßen Betrieb der elektrischen Maschine.

Weitere Merkmale, Vorteile und Wirkungen der Erfindung ergeben sich aus der nachfolgenden Darstellung eines Ausführungsbeispiels. In den Zeichnungen, auf welche dabei Bezug genommen wird, zeigen:
Fig. 1 eine schematische Darstellung einer Rotorkonstruktion eines Rotors einer elektrischen Maschine;
Fig. 2 eine schematische Darstellung eines Querschnitts eines Stabes der Rotorkonstruktion der Fig. 1;
Fig. 3 eine schematische Darstellung von zwei elektrischen Maschinen mit miteinander gekoppelten Rotoren;
Fig. 4 eine schematische Darstellung von drei elektrischen Maschinen mit miteinander gekoppelten Rotoren in einer Sicht entlang der Rotationsachsen der elektrischen Maschinen;
Fig. 5 eine schematische Darstellung einer Koppelung von zwei Rotoren über Zahnräder der Rotoren;
Fig. 6 eine schematische Darstellung einer Startereinheit.

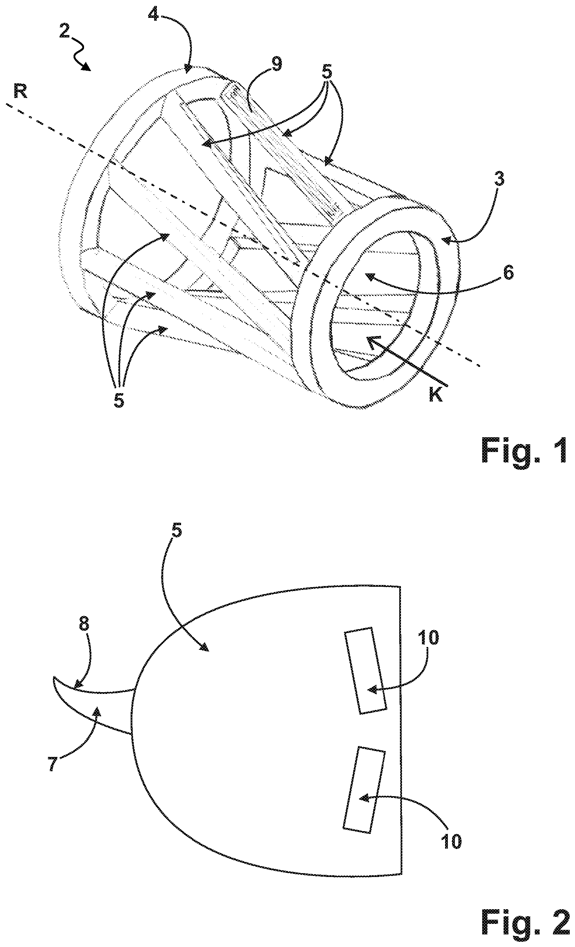

In Fig. 1 ist schematisch eine Rotorkonstruktion 2 eines Rotors einer elektrischen Maschine 1 dargestellt. Die elektrische Maschine 1 kann ein Elektromotor oder ein elektrischer Generator G sein. Der Rotor bzw. die Rotorkonstruktion 2 ist um eine Rotationsachse R relativ zu einem Stator der elektrischen Maschine 1 rotierbar gelagert. Der Stator ist üblicherweise formkorrespondierend zum Rotor, insbesondere der Rotorkonstruktion 2, umfänglich um den Rotor angeordnet. Der Stator und der Rotor sind üblicherweise elektromagnetisch gekoppelt, um zwischen einer elektrischen Energie und einer Bewegungsenergie des Rotors zu wandeln. Die Rotorkonstruktion 2 weist ein erstes Stirnelement 3 und ein zweites Stirnelement 4, welche in einer Richtung entlang der Rotationsachse R voneinander beabstandet sind. Das erste Stirnelement 3 und das zweite Stirnelement 4 sind mit mehreren Stäben 5 der Rotorkonstruktion 2 miteinander verbunden, wobei die Stäbe 5 entlang eines Umfangs um die Rotationsachse R beabstandet voneinander verteilt angeordnet sind, sodass die Stäbe 5 einen sich vom ersten Stirnelement 3 zum zweiten Stirnelement 4 erweiternden Hohlraum 6 definieren. Üblicherweise bilden die Stäbe 5 eine käfigartige Struktur, welche den Hohlraum 6 umfänglich umgibt. Das erste Stirnelement 3 und das zweite Stirnelement 4 weisen eine die Rotationsachse R umfänglich umgebende Ringform auf. Der jeweilige Stab 5 erstreckt sich vom ersten Stirnelement 3 zum zweiten Stirnelement 4, wobei Längsachsen der Stäbe 5 zueinander divergierend vom ersten Stirnelement 3 zum zweiten Stirnelement 4 orientiert sind. Die Stäbe 5 liegen in einer gedachten Konusmantelfläche, insbesondere Mantelfläche eines Kegelstumpfes, welche sich in Richtung vom ersten Stirnelement 3 zum zweiten Stirnelement 4 erweitert. Vorzugsweise verlaufen die Stäbe 5 in einer Sicht entlang der Rotationsachse R unter einem Versatzwinkel in Bezug auf eine jeweilige gedachte radiale Ausrichtung der Stäbe 5 vom ersten Stirnelement 3 zum zweiten Stirnelement 4. Im Einsatz kann bei Rotation des Rotors mit den Stäben 5 eine Kühlfluidströmung K eines im Hohlraum 6 befindlichen Kühlfluids zur Kühlung des Rotors in Richtung vom ersten Stirnelement 3 zum zweiten Stirnelementes 4 generiert werden. Durch eine erste Durchgangsöffnung der Ringform des ersten Stirnelementes 3 kann Kühlfluid in den Hohlraum 6 geführt werden. Durch eine zweite Durchgangsöffnung der Ringform des zweiten Stirnelementes 4 kann Kühlfluid aus dem Hohlraum 6 hinausgeführt werden. Günstig ist es, wenn an einem oder mehreren der Stäbe 5 ein vom jeweiligen Stab 5 in den Hohlraum 6 abragendes Flügelelement 7 zur Kraftbeaufschlagung des Kühlfluids mit dem Flügelelement 7 bei Rotation des Rotors angeordnet ist. Das zweite Stirnelement 4 weist üblicherweise einen größeren durchschnittlichen Durchmesser als das erste Stirnelement 3 in einem jeweiligen Querschnitt orthogonal zur Rotationsachse R durch das jeweilige Stirnelement 3, 4 auf.

In Fig. 2 ist eine schematische Darstellung eines Ausschnitts der Rotorkonstruktion 2, welcher einen orthogonal zur Längsrichtung eines Stabes 5 der Stäbe 5 orientierten Querschnitt durch den Stab 5 darstellt, gezeigt. Am Stab 5 ist ein in den Hohlraum 6 abragendes Flügelelement 7 angeordnet. Das Flügelelement 7 weist im orthogonal zur Längsachse des Stabes 5 orientierten Querschnitt durch den Stab 5 eine spitz zulaufende Form auf. Das Flügelelement 7 weist eine, insbesondere konkave, Schaufelfläche 8 auf, wobei die Schaufelfläche 8 üblicherweise quer zu einer Bewegungsrichtung des Stabes 5 bei Rotation des Rotors, insbesondere der Rotorkonstruktion 2, orientiert ist. Das Flügelelement 7 kann sich entlang einer überwiegenden Länge des Stabes 5 entlang des Stabes 5 erstrecken. Mehrere, insbesondere sämtliche, der Stäbe 5 der Rotorkonstruktion 2 können derart, insbesondere mit solchen Flügelelementen 7, umgesetzt sein.

Im und/oder am jeweiligen Stab 5 sind eine oder mehrere Spulenwicklungen 9 des Rotors zur Bildung eines Magnetfeldes des Rotors angeordnet, dargestellt in Fig. 1. Mit den Spulenwicklungen 9 wird im Einsatz üblicherweise ein Pol des Rotors gebildet. Die elektrische Leitung der jeweiligen Spulenwicklung 9 und/oder die jeweilige Spulenwicklung 9 kann entlang einer überwiegenden Längserstreckung des jeweiligen Stabes 5 verlaufend angeordnet sein. Im und/oder am jeweiligen Stab 5 können ein oder mehrere Permanentmagnete 10 zur Bildung eines Erregersystems der elektrischen Maschine 1 angeordnet sein. Die Permanentmagnete 10 sind vorzugsweise in einem vom Hohlraum 6 abgewandten Außenbereich des Stabes 5 angeordnet.

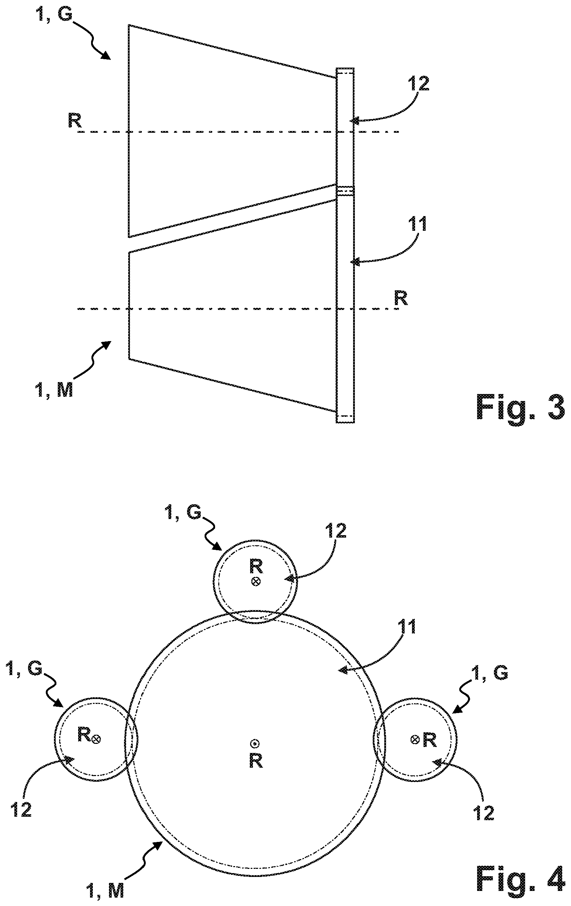

In Fig. 3 ist eine schematische Darstellung von zwei elektrischen Maschinen 1, welche jeweils wie vorstehend beschrieben umgesetzt sein können, dargestellt, wobei die Rotoren der elektrischen Maschinen 1 zur Drehmomentübertragung miteinander gekoppelt sind. Auf diese Weise kann eine Maschinenanordnung, aufweisend die zwei elektrischen Maschinen 1 gebildet sein. Eine der elektrischen Maschinen 1 ist als Elektromotor M und eine der elektrischen Maschinen 1 ist als elektrischer Generator G ausgebildet. Zweckmäßig kann im Einsatz der Generator G mit dem Elektromotor M angetrieben werden, wobei üblicherweise der Rotor des Elektromotors M mit dem Rotor des Generators G gekoppelt ist, um mit dem Rotor des Elektromotors M ein Drehmoment bzw. eine Rotationsenergie an den Rotor des Generators G zu übertragen. Üblicherweise ist die jeweilige elektrische Maschine 1 mit einer entlang der Rotationsachse R in Richtung vom ersten Stirnelement 3 zum zweiten Stirnelement 4 sich erweiternden, insbesondere konusförmigen, Außengestalt ausgebildet. Dies kann als Folge vorstehend beschriebener Form des Rotors, insbesondere der Rotorkonstruktion 2, platzeffizient erfolgen. Der Elektromotor M und der Generator G sind in Bezug auf eine jeweilige Richtung entlang der jeweiligen Rotationsachse R vom jeweiligen ersten Stirnelement 3 zum jeweiligen zweiten Stirnelement 4 gegengleicher Richtung orientiert nebeneinander angeordnet, um die Rotoren miteinander zu koppeln. Auf diese Weise können die elektrischen Maschinen 1, insbesondere der Elektromotor M und der Generator G, platzsparend nebeneinander angeordnet sein.

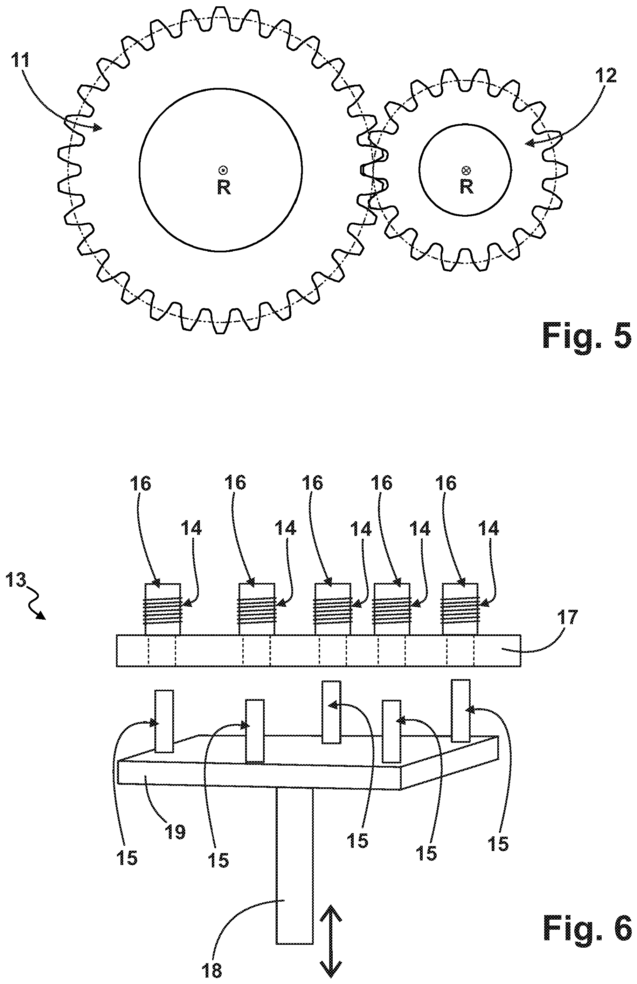

Der Elektromotor M weist ein als erstes Zahnrad 11 ausgebildetes erstes Getriebebauteil auf. Der Generator G weist ein als zweites Zahnrad 12 ausgebildetes zweites Getriebebauteil auf. Das erste Zahnrad 11 und das zweite Zahnrad 12 bilden ein Getriebe, mit welchem der Rotor des Elektromotors M und der Rotor des Generators G zur Drehmomentübertragung gekoppelt sind. Das erste Zahnrad 11 ist, insbesondere starr, am zweiten Stirnelement 4 des Elektromotors M angeordnet oder als Teil des zweiten Stirnelementes 4 ausgebildet. Das zweite Zahnrad 12 ist, insbesondere starr, am ersten Stirnelement 3 des Generators G angeordnet oder als Teil des ersten Stirnelementes 3 ausgebildet. Vorzugsweise greifen das erste Zahnrad 11 und das zweite Zahnrad 12, insbesondere deren Zähne, zur Drehmomentübertragung formschlüssig ineinander. Das erste Zahnrad 11 und das zweite Zahnrad 12 sind ausgebildet, vom Rotor des Elektromotors M zum Rotor des Generators G eine Drehzahlübersetzung ins Schnelle durchzuführen. Hierzu weist das erste Zahnrad 11 in der Regel einen größeren durchschnittlichen Durchmesser als das zweite Zahnrad 12 auf. Dies kann effizient umgesetzt werden, da das zweite Stirnelement 4 üblicherweise einen größeren durchschnittlichen Durchmesser als das erste Stirnelement 3 aufweist. In Fig. 5 ist eine schematische Darstellung des ersten Zahnrades 11 des Elektromotors M und des zweiten Zahnrades 12 des Generators G dargestellt, wobei das erste Zahnrad 11 und das zweite Zahnrad 12, insbesondere deren Zähne, zur Drehmomentübertragung formschlüssig ineinandergreifen.

In Fig. 4 ist eine schematische Darstellung von drei elektrischen Maschinen 1, welche jeweils wie vorstehend beschrieben umgesetzt sein können, in einer Sicht entlang der Rotationsachsen R der elektrischen Maschinen 1 dargestellt, wobei die Rotoren der elektrischen Maschinen 1 zur Drehmomentübertragung miteinander gekoppelt sind. Auf diese Weise kann eine Maschinenanordnung, aufweisend die drei elektrischen Maschinen 1 gebildet sein. Eine der elektrischen Maschinen 1 ist als Elektromotor M und zwei der elektrischen Maschinen 1 sind jeweils als elektrischer Generator G ausgebildet. Jeder der Generatoren G ist wie zur Maschinenanordnung der Fig. 3 ausgeführt umgesetzt und mit dem Elektromotor M zur Drehmomentübertragung gekoppelt. Die zweiten Zahnräder der Generatoren G können entlang eines Umfangs um das erste Zahnrad 11 verteilt angeordnet sein, wobei das jeweilige zweite Zahnrad 12 zur Drehmomentübertragung mit dem ersten Zahnrad 11 des Elektromotors M gekoppelt ist. In analoger Weise kann die Maschinenanordnung mit einem Elektromotor M und mehr als zwei elektrischen Generatoren G gebildet sein, wobei jeder der elektrischen Generatoren G mit dem Elektromotor M zur Drehmomentübertragung gekoppelt ist.

In Fig. 6 ist eine schematische Darstellung einer Startereinheit 13 zur Erzeugung einer Anfangsdrehzahl eines Elektromotors M dargestellt. Der Elektromotor M kann der vorstehend zu Fig. 1 bis Fig. 4 beschriebene Elektromotor M sein. Die Startereinheit 13 weist zur Wandlung zwischen Bewegungsenergie und Mehrphasenstrom eine Spulenanordnung von mehreren relativ zueinander positionsfest angeordneten elektrischen Spulen 14 und eine Magneteanordnung von mehreren relativ zueinander positionsfest angeordneten Magneten 15 auf. Die Startereinheit 13 kann mehrere Aufnahmebehälter 16 aufweisen, wobei jeweils eine der Spulen 14 an jeweils einem der Aufnahmebehälter 16 angeordnet ist. Die Aufnahmebehälter 16 können mit, insbesondere auf, einem gemeinsamen Trageelement 17 der Startereinheit 13, beispielsweise einer Trageplatte der Startereinheit 13, gehalten, insbesondere auf dieser angeordnet, sein. Jeweils einer der Magnete 15 und jeweils eine der Spulen 14 bilden ein Magnet-Spule-Paar der Startereinheit 13, wobei unterschiedliche Magnet-Spule-Paare voneinander verschiedene Abstände zwischen dem jeweiligen Magnet 15 und der jeweiligen Spule 14 aufweisen. Die Startereinheit 13 weist eine Bewegungseinrichtung mit einem Bewegungselement 18, beispielsweise einer Schubstange, auf, sodass eine zyklische Bewegung des Bewegungselementes 18 mit einer zyklischen Bewegung der Magneteanordnung und der Spulenanordnung relativ zueinander korrespondiert, um einen Abstand zwischen den Magneten 15 und Spulen 14 der Magnet-Spule-Paare zyklisch zu variieren. Dabei kann die Spulenanordnung relativ zu den Aufnahmebehälter 16 derart bewegt werden, dass mehrere der Magnete 15 zu unterschiedlichen Zeitpunkten in die jeweiligen Aufnahmebehälter 16 und/oder Spulen 14 eingefügt werden, um mittels elektromagnetischer Induktion eine elektrische Spannung in den Spulen 14 zu generieren. Auf diese Weise kann ein Mehrphasenstrom erzeugt werden. Hierzu können die Magnete 15 auf einer gemeinsamen Plattform 19 angeordnet sein, wobei das Bewegungselement 18 mit der Plattform 19 verbunden ist, um mit Bewegung des Bewegungselementes 18 die Plattform 19 zu bewegen. Beispielsweise kann das Bewegungselement 18 ausgebildet sein, die Plattform 19, insbesondere zyklisch, zu heben und zu senken, um die zyklische Bewegung umzusetzen. Das Bewegungselement 18 kann mit einer Motorvorrichtung der Startereinheit 13 zum Antrieb des Bewegungselementes 18 verbunden sein.

## Patentansprüche

1. Elektrische Maschine (1), wie einen Elektromotor oder elektrischen Generator (G), aufweisend einen Stator und einen relativ zum Stator um eine Rotationsachse (R) rotierbaren Rotor, um mit elektromagnetischer Koppelung des Stators und des Rotors zwischen elektrischer Energie und Bewegungsenergie zu wandeln, wobei der Rotor mit einer Rotorkonstruktion (2), aufweisend ein erstes Stirnelement (3), ein zweites Stirnelement (4), welche Stirnelemente (3, 4) entlang der Rotationsachse (R) voneinander beabstandet sind, und jeweils zwischen den Stirnelementen (3, 4) verlaufenden Stäben (5), gebildet ist, wobei die Stäbe (5) entlang eines Umfangs um die Rotationsachse (R) beabstandet voneinander verteilt angeordnet sind, sodass die Stäbe (5) zwischen dem ersten Stirnelement (3) und dem zweiten Stirnelement (4) einen sich zumindest abschnittsweise entlang der Rotationsachse (R) vom ersten Stirnelement (3) zum zweiten Stirnelement (4) erweiternden Hohlraum (6) definieren, um im Einsatz bei Rotation des Rotors mit den Stäben (5) eine Kühlfluidströmung (K) eines im Hohlraum (6) befindlichen Kühlfluids in Richtung des zweiten Stirnelementes (4) zu generieren, **dadurch gekennzeichnet, dass** die Stäbe (5) eine Käfigstruktur, welche die Rotationsachse (R) umfänglich umgibt, bilden, und der Hohlraum (6) umfänglich von den Stäben (5) umgeben ist, wobei jeweils zwischen zwei entlang des Umfangs benachbarten Stäben (5) ein Durchführungsspalt gebildet ist, durch welchen Durchführungsspalt das im Hohlraum (6) befindliche Kühlfluid hindurchfließen kann, wobei an einem oder mehreren der Stäbe (5) ein vom jeweiligen Stab (5) in den Hohlraum (6) abragendes Flügelelement (7), insbesondere aufweisend eine Schaufelfläche (8), zur Kraftbeaufschlagung des Kühlfluids bei Rotation des Rotors angeordnet ist, wobei sich das jeweilige Flügelelement (7) entlang einer überwiegenden Länge des jeweiligen Stabes (5) entlang des Stabes (5) erstreckt, wobei der Hohlraum (6) ein konusförmiges Hohlraumvolumen umfasst und/oder der Stator und Rotor mit einer entlang der Rotationsachse (R) in Richtung vom ersten Stirnelement (3) zum zweiten Stirnelement (4) sich erweiternden konusförmigen Außengestalt ausgebildet sind.

2. Elektrische Maschine (1) nach Anspruch 1, **dadurch gekennzeichnet, dass** im und/oder am jeweiligen Stab (5) eine oder mehrere Spulenwicklungen (9) zur Bildung eines Magnetfeldes des Rotors angeordnet ist, um mit den Spulenwicklungen (9) im Einsatz einen Pol des Rotors zu bilden.

3. Elektrische Maschine (1) nach Anspruch 1 oder 2, **dadurch gekennzeichnet, dass** das erste Stirnelement (3) und/oder das zweite Stirnelement (4) eine die Rotationsachse (R) umfänglich umgebende Ringform aufweisen, um im Einsatz durch eine Öffnung der Ringform das Kühlfluid hindurchzuführen.

4. Elektrische Maschine (1) nach einem der Ansprüche 1 bis 3, **dadurch gekennzeichnet, dass** die Stäbe (5) entlang einer gedachten Rotationsfläche, insbesondere Konusmantelfläche, welche sich in Richtung vom ersten Stirnelement (3) zum zweiten Stirnelement (4) erweitert, verlaufen.

5. Elektrische Maschine (1) nach einem der Ansprüche 1 bis 4, **dadurch gekennzeichnet, dass** in einer Sicht parallel zur Rotationsachse (R) die Stäbe (5) unter einem Versatzwinkel in Bezug auf eine jeweilige gedachte radiale Ausrichtung der Stäbe (5) vom ersten Stirnelement (3) zum zweiten Stirnelement (4) verlaufen.

6. Elektrische Maschine (1) nach einem der Ansprüche 1 bis 5, **dadurch gekennzeichnet, dass** in und/oder an einem oder mehreren Stäben (5) der Stäbe (5), insbesondere in einem vom Hohlraum (6) abgewandten Außenbereich des Stabes (5), ein Permanentmagnet (10) zur Bildung eines Erregersystems der elektrischen Maschine (1) angeordnet ist.

7. Elektrische Maschine (1) nach einem der Ansprüche 1 bis 6, **dadurch gekennzeichnet, dass** der jeweilige Stab (5) in einem orthogonal zur Längsachse des Stabes (5) orientierten Querschnitt durch den Stab (5) eine längliche Form, vorzugsweise mit einer zum Hohlraum (6) orientierten Längserstreckung der länglichen Form, aufweist.

8. Elektrische Maschine (1) nach einem der Ansprüche 1 bis 7, **dadurch gekennzeichnet, dass** am ersten Stirnelement (3) und/oder am zweiten Stirnelement (4) jeweils ein Getriebebauteil, insbesondere ein Zahnrad, angeordnet ist, um ein Drehmoment des Rotors über das jeweilige Getriebebauteil zu übertragen.

9. Elektrische Maschine (1) nach einem der Ansprüche 1 bis 8, aufweisend eine Startereinheit (13) zur Erzeugung einer Anfangsdrehzahl des Rotors der elektrischen Maschine (1), wobei die Startereinheit (13) zur Wandlung zwischen Bewegungsenergie und Mehrphasenstrom eine Spulenanordnung von mehreren relativ zueinander positionsfesten elektrischen Spulen (14) und eine Magneteanordnung von mehreren relativ zueinander positionsfesten Magneten (15) aufweist, wobei einer der Magnete (15) und eine der Spulen (14) ein Magnet-Spule-Paar bilden, wobei unterschiedliche Magnet-Spule-Paare voneinander verschiedene Abstände zwischen dem jeweiligen Magnet (15) und der jeweiligen Spule (14) aufweisen, wobei die Startereinheit (13) eine Bewegungseinrichtung mit einem Bewegungselement (18), wie einer Schubstange, aufweist, sodass eine zyklische Bewegung des Bewegungselementes (18) mit einer zyklischen Bewegung der Magneteanordnung und der Spulenanordnung relativ zueinander korrespondiert, um einen Abstand zwischen den Magneten (15) und Spulen (14) der Magnet-Spule-Paare zyklisch zu variieren.

10. Maschinenanordnung, aufweisend mehrere elektrische Maschinen (1) nach einem der Ansprüche 1 bis 9, wobei eine der Maschinen als Motor (M) und eine der Maschinen als elektrischer Generator (G) umgesetzt ist, wobei der Rotor des Motors (M) und der Rotor des Generators (G) über ein Getriebe der Maschinenanordnung zur Drehmomentübertragung gekoppelt sind, um mit dem Motor (M) den Generator (G) anzutreiben.

11. Maschinenanordnung nach Anspruch 10, **dadurch gekennzeichnet, dass** mehrere der elektrischen Maschinen (1) jeweils als Generator (G) umgesetzt sind, wobei ein erstes Getriebebauteil des Motors (M) mit mehreren zweiten Getriebebauteilen der Generatoren (G) zur Drehmomentübertragung gekoppelt ist, um mit dem Motor (M) die Generatoren (G) anzutreiben.

12. Maschinenanordnung nach Anspruch 10 oder 11, **dadurch gekennzeichnet, dass** der Rotor des Motors (M) und der Rotor des jeweiligen Generators (G) über das Getriebe, insbesondere die Getriebebauteile, mit einer Drehzahlübersetzung ins Schnelle gekoppelt sind.

13. Maschinenanordnung nach einem der Ansprüche 10 bis 12, **dadurch gekennzeichnet, dass** der Rotor des Motors (M) eine höhere Polpaarzahl als der Rotor des jeweiligen Generators (G) aufweist.

14. Maschinenanordnung nach einem der Ansprüche 11 bis 13, **dadurch gekennzeichnet, dass** ein elektrischer Ausgang eines der Generatoren (G) mit einem elektrischen Eingang des Motors (M) zur energetischen Versorgung des Motors (M), insbesondere über einen elektrischen Energiespeicher, gekoppelt ist, insbesondere um mit dem Generator (G) gebildete elektrische Energie zumindest teilweise an den Motor (M) zurückzuführen.

## Claims

1. An electric machine (1), such as an electric motor or electric generator (G), comprising a stator and a rotor which is rotatable about a rotational axis (R) relative to the stator, in order to carry out a conversion between electrical energy and kinetic energy by way of electromagnetic coupling of the stator and the rotor, wherein the rotor is formed by way of a rotor construction (2) comprising a first front element (3), a second front element (4), which front elements (3, 4) are spaced apart from one another along the rotational axis (R), and rods (5) which run in each case between the front elements (3, 4), wherein the rods (5) are arranged distributed spaced apart from one another along a circumference about the rotational axis (R), so that between the first front element (3) and the second front element (4) the rods (5) define a cavity (6) widening at least in some portions along the rotational axis (R) from the first front element (3) to the second front element (4), in order to generate during use a cooling fluid flow (K) of a cooling fluid located in the cavity (6) in the direction of the second front element (4) during the rotation of the rotor with the rods (5),
**characterized in that** the rods (5) form a cage structure which circumferentially surrounds the rotational axis (R) and the cavity (6) is circumferentially surrounded by the rods (5), wherein in each case a through-gap is formed between two rods (5) which are adjacent along the circumference, the cooling fluid located in the cavity (6) being able to flow through said through-gap, wherein a vane element (7), in particular comprising a blade surface (8), protruding from the respective rod (5) into the cavity (6) for the application of the force of the cooling fluid during the rotation of the rotor, is arranged on one or more of the rods (5), wherein the respective vane element (7) extends along the rod (5), along a substantial length of the respective rod (5), wherein the cavity (6) comprises a conical cavity volume and/or the stator and rotor are configured with a conical outer shape widening along the rotational axis (R) in the direction from the first front element (3) to the second front element (4).

2. The electric machine (1) according to Claim 1, **characterized in that** one or more coil windings (9) to form a magnetic field of the rotor is arranged in and/or on the respective rod (5), in order to form with the coil windings (9) a pole of the rotor during use.

3. The electric machine (1) according to Claim 1 or 2, **characterized in that** the first front element (3) and/or the second front element (4) have an annular shape circumferentially surrounding the rotational axis (R) in order to pass the cooling fluid through an opening of the annular shape during use.

4. The electric machine (1) according to one of Claims 1 to 3, **characterized in that** the rods (5) run along an imaginary rotational surface, in particular a lateral surface of a cone, which widens in the direction from the first front element (3) to the second front element (4).

5. The electric machine (1) according to one of Claims 1 to 4, **characterized in that**, in a view parallel to the rotational axis (R), the rods (5) run at an offset angle relative to a respective imaginary radial orientation of the rods (5) from the first front element (3) to the second front element (4).

6. The electric machine (1) according to one of Claims 1 to 5, **characterized in that** a permanent magnet (10) to form an excitation system of the electric machine (1) is arranged in and/or on one or more rods (5) of the rods (5), in particular in an outer region of the rod (5) facing away from the cavity (6).

7. The electric machine (1) according to one of Claims 1 to 6, **characterized in that**, in a cross section through the rod (5) oriented at right-angles to the longitudinal axis of the rod (5), the respective rod (5) has an elongated shape, preferably with a longitudinal extent of the elongated shape oriented toward the cavity (6).

8. The electric machine (1) according to one of Claims 1 to 7, **characterized in that** in each case a gear component, in particular a gearwheel, is arranged on the first front element (3) and/or on the second front element (4) in order to transmit a torque of the rotor via the respective gear component.

9. The electric machine (1) according to one of Claims 1 to 8, comprising a starter unit (13) for generating an initial speed of the rotor of the electric machine (1), wherein the starter unit (13), for converting between kinetic energy and multiphase current, has a coil arrangement of a plurality of electric coils (14) which are fixed in position relative to one another and a magnet arrangement of a plurality of magnets (15) which are fixed in position relative to one another, wherein one of the magnets (15) and one of the coils (14) form a magnet-coil pair, wherein different magnet-coil pairs have different spacings from one another between the respective magnet (15) and the respective coil (14), wherein the starter unit (13) has a movement device with a movement element (18) such as a push rod, so that a cyclical movement of the movement element (18) corresponds to a cyclical movement of the magnet arrangement and the coil arrangement relative to one another, in order to vary cyclically a spacing between the magnets (15) and coils (14) of the magnet-coil pairs.

10. A machine arrangement comprising a plurality of electric machines (1) according to one of Claims 1 to 9, wherein one of the machines is implemented as a motor (M) and one of the machines is implemented as an electric generator (G), wherein the rotor of the motor (M) and the rotor of the generator (G) are coupled via a gear of the machine arrangement for the transmission of torque, in order to drive the generator (G) by the motor (M).

11. The machine arrangement according to Claim 10, **characterized in that** a plurality of electric machines (1) are implemented in each case as a generator (G), wherein a first gear component of the motor (M) is coupled to a plurality of second gear components of the generators (G) for the transmission of torque, in order to drive the generators (G) by the motor (M).

12. The machine arrangement according to Claim 10 or 11, **characterized in that** the rotor of the motor (M) and the rotor of the respective generator (G) are coupled via the gear, in particular the gear components, with a speed ratio to a faster speed.

13. The machine arrangement according to one of Claims 10 to 12, **characterized in that** the rotor of the motor (M) has a greater number of pole pairs than the rotor of the respective generator (G).

14. The machine arrangement according to one of Claims 11 to 13, **characterized in that** an electrical output of one of the generators (G) is coupled to an electrical input of the motor (M) for supplying energy to the motor (M), in particular via an electrical energy storage device, in particular in order to return electrical energy formed by the generator (G) at least partially to the motor (M).

## Revendications

1. Machine électrique (1), telle qu'un moteur électrique ou un générateur électrique (G), présentant un stator et un rotor tournant par rapport au stator autour d'un axe de rotation (R), afin de convertir l'énergie électrique et l'énergie cinétique par couplage électromagnétique du stator et du rotor, dans laquelle le rotor est constitué d'une structure (2), présentant un premier élément frontal (3), un deuxième élément frontal (4), lesquels éléments frontaux (3, 4) sont espacés l'un de l'autre le long de l'axe de rotation (R), et des tiges (5) s'étendant entre les éléments frontaux (3, 4), dans laquelle les tiges (5) sont disposées à distance les unes des autres sur une circonférence autour de l'axe de rotation (R), de sorte que les tiges (5) entre le premier élément frontal (3) et le deuxième élément frontal (4) définissent une cavité (6) s'élargissant au moins par sections le long de l'axe de rotation (R) du premier élément frontal (3) au deuxième élément frontal (4), afin de générer pendant l'utilisation en rotation du rotor avec les tiges (5) un flux de fluide de refroidissement (K) se trouvant dans la cavité (6) dans la direction du deuxième élément frontal (4),
**caractérisé en ce que** les tiges (5) forment une structure en cage, qui entoure circonférentiellement l'axe de rotation (R) et la cavité (6) est entourée circonférentiellement par les tiges (5), dans laquelle un espace de passage est formé entre deux tiges (5) adjacentes respectives le long de la circonférence, espace de passage à travers lequel le fluide de refroidissement se trouvant dans la cavité (6) peut circuler, dans laquelle un élément à aubes (7) dépassant en saillie de la tige (5) respective dans la cavité (6) et présentant notamment une surface de pale (8), est disposé sur une ou plusieurs tiges (5) pour appliquer une force au fluide de refroidissement lors de la rotation du rotor, dans laquelle l'élément à aubes (7) respectif s'étend le long d'une longueur prédominante de la tige (5) respective, dans laquelle la cavité (6) comprend un volume de cavité conique et/ou le stator et le rotor sont conçus avec une forme extérieure conique qui s'élargit le long de l'axe de rotation (R) dans la direction du premier élément frontal (3) au deuxième élément frontal (4).

2. Machine électrique (1) selon la revendication 1, **caractérisée en ce qu'**une ou plusieurs spires de bobine (9) sont disposées dans et/ou sur la tige respective (5) afin de former un champ magnétique du rotor, de manière à former un pôle du rotor avec les spires de bobine (9) pendant le fonctionnement.

3. Machine électrique (1) selon la revendication 1 ou 2, **caractérisée en ce que** le premier élément frontal (3) et/ou le deuxième élément frontal (4) présentent une forme annulaire entourant circonférentiellement l'axe de rotation (R), afin de faire circuler le fluide de refroidissement à travers une ouverture dans la forme annulaire pendant le fonctionnement.

4. Machine électrique (1) selon une des revendications 1 à 3, **caractérisée en ce que** les tiges (5) s'étendent le long d'une surface de rotation imaginaire, notamment une surface de gaine conique, qui s'élargit dans la direction du premier élément frontal (3) au deuxième élément frontal (4).

5. Machine électrique (1) selon une des revendications 1 à 4, **caractérisée en ce que**, dans une vue parallèle à l'axe de rotation (R), les tiges (5) s'étendent selon un angle de décalage par rapport à une orientation radiale imaginaire respective des tiges (5) du premier élément frontal (3) au deuxième élément frontal (4).

6. Machine électrique (1) selon une des revendications 1 à 5, **caractérisée en ce qu'**un aimant permanent (10) destiné à constituer un système d'excitation de la machine électrique (1) est disposé dans et/ou sur une ou plusieurs tiges (5) des tiges (5), notamment dans une zone extérieure de la tige (5) opposée à la cavité (6).

7. Machine électrique (1) selon une des revendications 1 à 6, **caractérisée en ce que** la tige (5) présente une forme allongée dans une section transversale orientée orthogonalement à l'axe longitudinal de la tige (5) à travers la tige (5), de préférence avec un prolongement longitudinal de la forme allongée orienté vers la cavité (6).

8. Machine électrique (1) selon une des revendications 1 à 7, **caractérisée en ce qu'**un organe de transmission, notamment une roue dentée, est disposé sur le premier élément frontal (3) et/ou sur le deuxième élément frontal (4), afin de transmettre un couple de rotation du rotor par l'intermédiaire de l'organe de transmission respectif.

9. Machine électrique (1) selon une des revendications 1 à 8, présentant une unité de démarrage (13) pour générer une vitesse de rotation initiale du rotor de la machine électrique (1), dans lequel l'unité de démarrage(13) pour convertir l'énergie cinétique en courant polyphasé présente un ensemble de bobines composé de plusieurs bobines électriques (14) fixes les unes par rapport aux autres et un ensemble d'aimants (15) composé de plusieurs aimants (15) fixes les uns par rapport aux autres, dans laquelle un des aimants (15) et une des bobines (14) forment une paire aimant-bobine, dans laquelle des paires aimant-bobine différentes présentent des distances différentes l'un par rapport à l'autre entre l'aimant respectif (15) et la bobine respective (14), dans laquelle l'unité de démarrage (13) présente un dispositif de mouvement doté d'un élément mobile (18), tel qu'une tige de poussée, de sorte qu'un mouvement cyclique de l'élément mobile (18) corresponde à un mouvement cyclique de l'ensemble d'aimants et de l'ensemble de bobines l'un par rapport à l'autre, afin de faire varier cycliquement une distance entre les aimants (15) et les bobines (14) de la paire aimant-bobine.

10. Agencement de machine présentant plusieurs machines électriques (1) selon une des revendications 1 à 9, dans lequel une des machines est employée comme un moteur (M) et une des machines est employée comme un générateur électrique (G), dans lequel le rotor du moteur (M) et le rotor du générateur (G) sont couplés par un réducteur de l'agencement de machines pour la transmission du couple, afin d'entraîner le générateur (G) avec le moteur (M).

11. Agencement de machine selon la revendication 10, **caractérisé en ce que** plusieurs machines électriques (1) sont respectivement employées comme générateurs (G), dans lequel un premier organe de transmission du moteur (M) est couplé à plusieurs deuxièmes organes de transmission des générateurs (G) pour la transmission du couple de rotation, afin d'entraîner les générateurs (G) avec le moteur (M).

12. Agencement de machine selon la revendication 10 ou 11, **caractérisé en ce que** le rotor du moteur (M) et le rotor du générateur (G) correspondant sont couplés par l'intermédiaire du réducteur, notamment par les organes de transmission, avec une démultiplication de vitesse de rotation rapide.

13. Agencement de machine selon une des revendications 10 à 12, **caractérisé en ce que** le rotor du moteur (M) présente un nombre de paires de pôles supérieur à celui du rotor du générateur (G) respectif.

14. Agencement de machine selon une des revendications 11 à 13, **caractérisé en ce que** la sortie électrique d'un des générateurs (G) est couplée à une entrée électrique du moteur (M) pour l'alimentation énergétique du moteur (M), notamment via un dispositif de stockage d'énergie électrique, en particulier pour restituer au moins partiellement au moteur (M) l'énergie électrique produite par le générateur (G).
